# FASCICULE DE BREVET EUROPEEN

(11) **EP 3 571 075 B1**
(45) Date de publication et mention de la délivrance du brevet: **02.12.2020**
(21) Numéro de dépôt: 18703056.4
(22) Date de dépôt: 16.01.2018
(51) Int. Cl.: B60H 1/34, F24F 13/062, B60H 1/00

(54) **AERATEUR, NOTAMMENT POUR VEHICULE AUTOMOBILE**
VENTILATOR, INSBESONDERE FÜR KRAFTFAHRZEUGE
VENTILATOR, PARTICULARLY FOR MOTOR VEHICLES

(30) Priorité: 20.01.2017 FR 1750469
(43) Date de publication de la demande: 27.11.2019
(73) Titulaire: Valeo Systemes Thermiques, 78322 Le Mesnil Saint-Denis Cedex (FR)
(72) Inventeur: NACER-BEY, Moussa, 78322 Le Mesnil Saint-Denis Cedex (FR); NEVEU, Daniel, 78322 Le Mesnil Saint-Denis Cedex (FR); BARAT, Didier, 78322 Le Mesnil Saint-Denis Cedex (FR); GOUR, Josselin, 78322 Le Mesnil Saint-Denis Cedex (FR)
(74) Mandataire: Tran, Chi-Hai
(86) Numéro de dépôt international: PCT/FR2018/050102
(87) Numéro de publication internationale: WO 2018/134512

(56) Documents cités:
- DE-A1- 19 739 652
- DE-A1-102005 012 538
- DE-B3-102004 013 171
- DE-B3-102010 016 520
- FR-A1- 2 785 233
- GB-A- 1 317 251
- JP-U- S6 245 629

## Description

La présente invention concerne un aérateur, notamment pour véhicule automobile.

De nos jours, des aérateurs sont installés à l'intérieur des habitacles des véhicules automobiles à différents endroits afin d'assurer le confort des occupants de cet habitacle et également d'assurer des fonctions de désembuage par exemple. De tels aérateurs sont installés au débouché d'une sortie d'air d'un conduit de ventilation. On trouve généralement ces aérateurs installés dans une planche de bord à l'avant des véhicules, mais ils peuvent également être installés au niveau d'une console centrale avant ou arrière, ou encore dans un plafond du véhicule automobile.

Ces aérateurs permettent la diffusion de l'air dans l'habitacle du véhicule. Par ailleurs, ces aérateurs remplissent différentes fonctions comme l'ouverture ou la fermeture du conduit de ventilation, ou encore une fonction d'orientation du flux d'air dans l'habitacle en position d'ouverture.

De tels aérateurs sont généralement équipés d'une série d'ailettes servant à l'orientation du flux d'air, les ailettes étant généralement montées pivotantes et maintenues parallèles entre elles. Ces ailettes peuvent, selon leur position, diriger le flux d'air frais ou chaud en direction ou non des occupants du véhicule, selon que ceux-ci souhaitent se rafraîchir ou se réchauffer directement, ou bien rafraîchir ou réchauffer l'habitacle du véhicule. Les ailettes peuvent également intervenir, selon leur implantation et leur orientation, pour le désembuage ou le dégivrage des vitres latérales et du pare-brise du véhicule. Outre les ailettes qui assurent ainsi la directivité du flux, les aérateurs actuels comportent habituellement un volet interne d'obturation, monté pivotant entre une position ouverte et une position fermée, avec possibilité d'occupation de positions intermédiaires, en vue de réaliser une opération d'ouverture/fermeture, y compris une ouverture partielle en vue du réglage du débit d'air diffusé.

Cependant, de tels aérateurs présentent une structure complexe, nécessitant la fabrication puis l'assemblage de nombreux composants de formes et natures diverses. Ces aérateurs sont donc des équipements coûteux. Par ailleurs, de tels aérateurs ne permettent pas de contrôler la focalisation du flux d'air afin de répondre à des besoins spécifiques des passagers.

On connaît du document FR2835219, un aérateur présentant un corps cylindrique comprenant une paroi transversale comportant des lumières afin de moduler la puissance du flux d'air dans le véhicule. Le corps cylindrique selon ce document est installé sur une surface sphérique qui permet d'orienter le flux d'air dans toutes les directions de l'habitacle pour répondre aux besoins des passagers.

Cependant, un tel aérateur présente un nombre de pièces relativement important aussi bien pour l'installation de celui-ci que pour la direction du flux d'air dans l'habitacle. De plus, un tel aérateur ne permet pas de contrôler la concentration du flux d'air.

On connaît enfin du document DE102010043216, un aérateur présentant deux éléments de forme tubulaire et des lamelles horizontales. Les lamelles horizontales permettent de diriger le flux d'air verticalement, alors que les éléments de forme tubulaire permettent d'orienter le flux d'air horizontalement. Les deux éléments de forme tubulaire sont couplés entre eux à l'aide d'un mécanisme qui permet de les mettre en rotation l'un par rapport à l'autre.

Cependant, un tel aérateur présente un nombre de pièces important.

D'autres exemples sont divulgués dans : FR2785233, GB1317251, DE102010016520, DE102005012538, JPS6245629U et DE19739652.

Un objectif de la présente invention est de remédier au moins partiellement aux problèmes de l'art antérieur exposés ci-dessus.

Un autre objectif de la présente invention, différent de l'objectif précédent, est de proposer un aérateur qui permet de réduire la puissance électrique nécessaire pour assurer le confort des passagers à l'intérieur de l'habitacle du véhicule.

Encore un objectif, différent des objectifs précédents, est de proposer un aérateur permettant de faire varier de manière continue et progressive la direction du flux d'air et sa concentration simultanément.

Un autre objectif de la présente invention, différent des objectifs précédents, est de proposer un aérateur présentant un nombre de pièces limité.

A cet effet pour atteindre au moins un des objectifs précités au moins partiellement, la présente invention a pour objet un aérateur, notamment pour un véhicule automobile, configuré pour orienter un flux d'air amené par un conduit de ventilation qui s'étend en arrière dudit aérateur, ledit aérateur comprenant :
- un boitier destiné à être raccordé à un conduit de ventilation et présentant une ouverture de sortie configurée pour permettre le passage du flux d'air amené par le conduit de ventilation vers l'intérieur de l'habitacle du véhicule, et
- des moyens d'obturation et de guidage du flux d'air, dans lequel :
- les moyens d'obturation et de guidage comportent une première et une deuxième paires de volets pivotants, la deuxième paire de volets étant disposée en aval de la première paire de volets par rapport au flux d'air,
- la première paire de volets est montée mobile en pivotement autour d'un premier axe commun de pivotement,
- la deuxième paire de volets est montée mobile en pivotement autour d'un deuxième axe commun de pivotement.

La présence des deux paires de volets permet d'une part d'orienter le flux d'air dans l'habitacle du véhicule et d'autre part de contrôler la concentration de ce flux d'air, ou encore la puissance du flux d'air pour des conditions d'alimentation identiques en amont. Par exemple, une certaine ouverture définie par la position relative de chacun de ces volets permettra de modifier l'intensité ou encore le cône de diffusion du flux d'air dans l'habitacle. La présence de ces volets permet donc une réduction de la puissance électrique nécessaire pour assurer le confort des passagers à l'intérieur de l'habitacle.

Par ailleurs, la présence de ces deux paires de volets permet de faire varier de manière continue et progressive la puissance, la direction et la concentration du flux d'air, ou encore la puissance et la direction du flux d'air de manière simultanée. En effet, les volets de chaque paire de volets permettent de modifier la concentration de l'écoulement du flux d'air juste en aval de l'ouverture de sortie du boitier par rapport au sens du flux d'air.

L'aérateur selon la présente invention peut en outre comporter l'une des caractéristiques suivantes prise seule ou en combinaison.

Les moyens d'obturation et de guidage sont disposés à l'intérieur du boitier et font saillie de l'ouverture de sortie.

Les volets de la première paire de volets sont mobiles indépendamment l'un de l'autre et les volets de la deuxième paire de volets sont mobiles indépendamment l'un de l'autre.

Le premier axe commun de pivotement est disposé selon une première orientation par rapport à la section du boitier et le deuxième axe commun de pivotement est disposé selon une deuxième orientation par rapport à la section du boitier, ladite deuxième orientation étant différente de la première orientation.

Selon un mode de réalisation particulier, la première orientation et la deuxième orientation des axes communs de pivotement sont perpendiculaires entre elles.

L'aérateur comporte pour chaque volet un actionneur associé configuré pour faire pivoter ledit volet indépendamment de l'autre volet de la même paire, chaque paire de volets étant mobile entre une position fermée dans laquelle la paire de volets obstrue totalement l'ouverture de sortie et une position ouverte dans laquelle la paire de volets libère l'ouverture de sortie, en passant par toute positions intermédiaires dans lesquelles la position relative de chaque volet est configurée pour définir une zone de soufflage dont la taille et l'emplacement au sein de l'ouverture de sortie sont variables en fonction de la position de chaque volet.

La zone de soufflage en position intermédiaire présente une taille comprise entre 5 % et 90 % de l'ouverture de sortie, de préférence comprise entre 10 % et 60%.

Les volets de la première paire de volets et de la deuxième paire de volets présentent chacun une surface d'au moins 60 % de la surface de l'ouverture de sortie.

Selon un mode de réalisation particulier, les volets d'au moins la première paire de volets portent un dispositif d'étanchéité configuré pour empêcher le passage du flux d'air lorsque la première paire de volets est en position fermée.

Les volets d'au moins la première paire de volets sont montés de façon imbriquée.

Selon une variante, la première paire de volets et la deuxième paire de volets sont imbriquées l'une dans l'autre.

Selon cette variante, la surface intérieure de la première paire de volets et la surface extérieure de la deuxième paire de volets sont séparées d'une distance comprise entre 0,1 mm et 0,5 mm.

De manière optionnelle dans cette variante, les volets portés par la première paire de volets et les volets portés par la deuxième paire de volets sont concentriques.

Les volets d'une même paire de volets présentent un rayon proche, de préférence identique à ± 5 %.

Selon une variante, les volets de la deuxième paire de volets présentent chacun une échancrure prenant naissance du côté opposé à la zone de soufflage et s'étendant en direction de la zone de soufflage, ladite échancrure étant configurée pour permettre le passage du premier axe commun de pivotement de la première paire de volets afin d'assurer l'entraînement des volets de la première paire de volets depuis l'extérieur des moyens d'obturation et de guidage.

Selon cette variante, les moyens d'obturation et de guidage présentent en outre une troisième paire de volets disposée au contact des volets de la deuxième paire de volets entre l'actionneur de la première paire de volets et la zone de soufflage et disposée mobile autour du deuxième axe commun de pivotement, les volets de la troisième paire de volets étant configurés pour masquer les échancrures de la deuxième paire de volets afin de limiter les fuites d'air latérales au niveau de l'ouverture de sortie lorsque les volets de la deuxième paire de volets sont en position fermée ou en position intermédiaire.

L'aérateur comporte une unité électronique de contrôle configurée pour piloter les différents actionneurs afin de faire pivoter les volets.

L'ouverture de sortie présente une grille hémisphérique configurée pour redresser l'écoulement du flux d'air.

Selon un mode de réalisation particulier, la grille hémisphérique est disposée en amont de la première paire de volets dans le flux d'air.

En variante, la grille hémisphérique est disposée en aval de la deuxième paire de volets dans le flux d'air.

D'autres caractéristiques et avantages de l'invention apparaîtront plus clairement à la lecture de la description suivante, donnée à titre d'exemple illustratif et non limitatif, et les dessins annexés dans lesquels :
- la figure 1 est une représentation schématique de face d'un aérateur selon un premier mode de réalisation de l'invention présentant deux paires de volets en position intermédiaire,
- la figure 2 est une représentation schématique en coupe latérale de l'aérateur selon le premier mode de réalisation de la figure 1,
- la figure 3A est une représentation schématique en perspective des moyens d'obturation et de guidage du flux d'air selon un premier angle de vue,
- la figure 3B est représentation schématique en perspective des moyens d'obturation et de guidage du flux d'air selon un deuxième angle de vue,
- la figure 4 est une représentation schématique en coupe latérale de l'aérateur lorsque les volets sont en position ouverte selon un deuxième mode de réalisation,
- la figure 5 est une représentation schématique en coupe latérale de l'aérateur de la figure 4 lorsque les volets sont en position fermée,
- la figure 6 est une représentation schématique en coupe latérale de l'aérateur lorsque les volets sont en position ouverte selon un troisième mode de réalisation,
- la figure 7 est une représentation schématique de face de l'aérateur présentant deux actionneurs,
- la figure 8 est une représentation schématique de la coopération d'une paire de volets au niveau d'un actionneur,
- les figures 9A à 11B sont des représentations schématiques en coupe transversale d'une paire de volets selon différents modes de réalisation lorsque la paire de volets est en position intermédiaire ou en position fermée,
- les figures 12A et 12B sont une représentation schématique en perspective de face de manière décalée de l'aérateur selon un quatrième mode de réalisation,
- la figure 13 est une représentation schématique en perspective arrière de manière décalée de l'aérateur selon le quatrième mode de réalisation,
- la figure 14 est une représentation schématique en perspective arrière de manière décalée des moyens d'obturation et de guidage selon le quatrième mode de réalisation, et
- la figure 15 est une représentation schématique en perspective de face de manière décalée des moyens d'obturation et de guidage selon le quatrième mode de réalisation.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à des première, à des deuxième et à des troisième paires de volets, à une première et à une deuxième sections du contour tubulaire, à un premier et à un deuxième axes communs de pivotement, à une première orientation et à une deuxième orientation des axes communs de pivotement, ou encore à une première et à une deuxième grille hémisphérique. Il s'agit d'un simple indexage pour différencier et dénommer des éléments proches ou de même nature ou structure mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier le fonctionnement de l'aérateur.

Dans la description suivante, on entend par tubulaire, un conduit allongé qui présente une section transversale pouvant correspondre à n'importe quelle forme géométrique, comme par exemple circulaire, carrée, rectangulaire, ou encore triangulaire.

D'autre part, dans la description suivante, on entend par imbriqué, une disposition d'un objet dans un autre, les deux objets pouvant être séparés par une faible distance.

Par ailleurs, aval est défini, dans la description suivante, selon le sens du flux d'air qui traverse le conduit de ventilation vers l'intérieur de l'habitacle du véhicule. Un premier élément en aval d'un deuxième élément est alors situé après le deuxième élément dans le sens de circulation du flux d'air. De même, amont, dans la description suivante, est également défini selon le sens du flux d'air qui traverse le conduit de ventilation. Un premier élément en amont d'un deuxième élément est alors situé avant le deuxième élément dans le sens de circulation du flux d'air.

Ensuite, dans la description suivante, on entend par « concentration du flux d'air », la modification du cône de diffusion de ce flux d'air à destination de l'habitacle afin de réduire ce cône de diffusion afin d'avoir un point de contact du flux d'air avec l'utilisateur ou une surface de l'habitacle de dimension variable ou contrôlée (effet « spot ») ou d'augmenter ce cône de diffusion afin d'avoir une lame de diffusion ou encore un flux d'air plus diffus en sortie de l'aérateur.

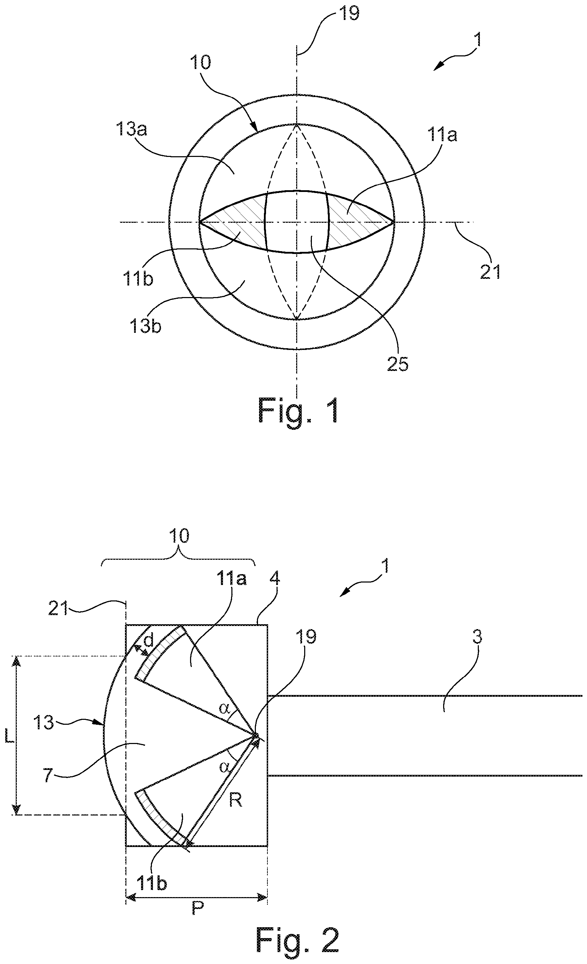

En référence à la figure 1, il est représenté un aérateur 1, notamment pour un véhicule automobile. L'aérateur 1 est configuré pour orienter un flux d'air amené par un conduit de ventilation 3 (visible sur la figure 2) qui s'étend en arrière dudit aérateur 1. Cet aérateur 1 peut être installé dans une planche de bord du véhicule automobile, mais il peut aussi bien être installé dans une console centrale située à l'arrière de l'habitacle, ou encore au niveau du plafonnier de ce véhicule par exemple.

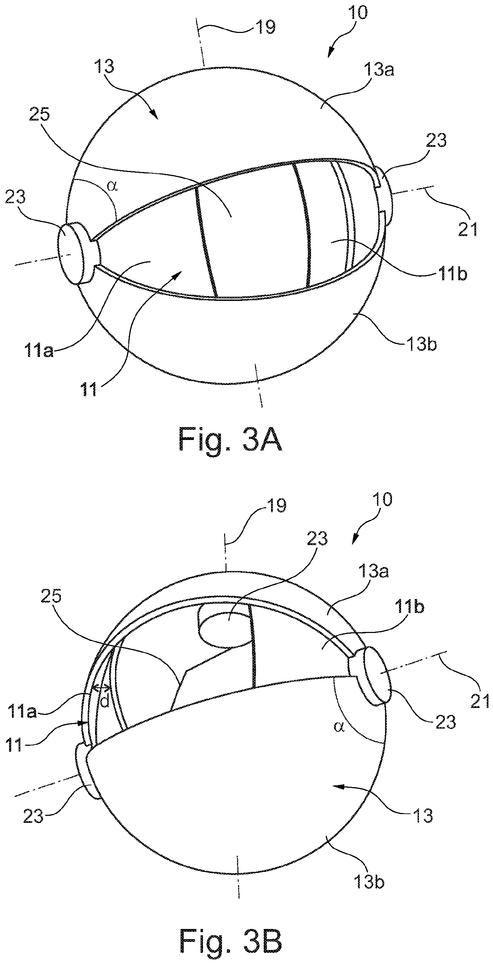

L'aérateur 1 comprend un boitier 4 raccordé au conduit de ventilation 3 (mieux visible sur la figure 2) présentant une ouverture de sortie 7. Cette ouverture de sortie 7 est configurée pour permettre le passage du flux d'air amené par le conduit de ventilation 3 vers l'intérieur de l'habitacle du véhicule automobile. Le boitier 4 peut présenter des moyens de fixation (non représentés) configurés pour assurer son installation à l'intérieur de l'habitacle du véhicule automobile, à l'intérieur de la planche de bord, ou encore au niveau du conduit de ventilation 3 par exemple. Lorsque le boitier 4 présente des moyens de fixation configurés pour assurer son raccordement au conduit de ventilation 3, le boitier 4 et le conduit de ventilation 3 sont deux éléments distincts et le raccord effectué entre ces deux éléments présente une jonction. Selon un autre mode de réalisation, le conduit de ventilation 3 et le boitier 4 peuvent être formés d'une seule pièce ; dans ce cas le raccord entre ces deux éléments ne présente aucune jonction. L'aérateur 1 présente également des moyens d'obturation et de guidage 10 du flux d'air (mieux visibles sur les figures 3A, 3B, 14 et 15), disposés à l'intérieur du boitier 4 et pouvant faire saillie de l'ouverture de sortie 7.

En référence à la figure 1, l'ouverture de sortie 7 présente une section de forme circulaire. Toutefois, selon d'autres modes de réalisation non représentés ici, l'ouverture de sortie 7 peut présenter un contour ayant d'autres formes géométriques, comme par exemple une forme triangulaire, ou encore une forme parallélépipédique afin de s'adapter à la forme de l'élément permettant son installation dans l'habitacle du véhicule et éventuellement pour répondre à certaines contraintes esthétiques présentes chez certains constructeurs.

Comme montré en référence aux figures 1 à 3B, les moyens d'obturation et de guidage 10 comportent une première 11 et une deuxième 13 paires de volets pivotants. Les différents volets 11a, 11b, 13a, 13b présentent une forme de portion de calotte présentant un angle d'ouverture α (visible sur les figures 2 à 3B) compris entre 45 et 90°. Selon le mode de réalisation de la figure 2, les calottes des volets 11a, 11b, 13a, 13b présentent une courbure orientée vers l'ouverture de sortie 7. Par ailleurs, la deuxième paire de volets 13 est disposée en aval de la première paire de volets 11 par rapport au flux d'air.

La première paire de volets 11 est montée mobile en pivotement autour d'un premier axe commun de pivotement 19. Les volets 11a, 11b formant cette première paire de volets 11 sont mobiles indépendamment l'un de l'autre autour de ce premier axe commun de pivotement 19. Par ailleurs, le premier axe commun de pivotement 19 est disposé selon une première orientation par rapport à la section du boitier 4. Plus précisément, le premier axe commun de pivotement 19 présente une architecture verticale selon le mode de réalisation particulier de la figure 1.

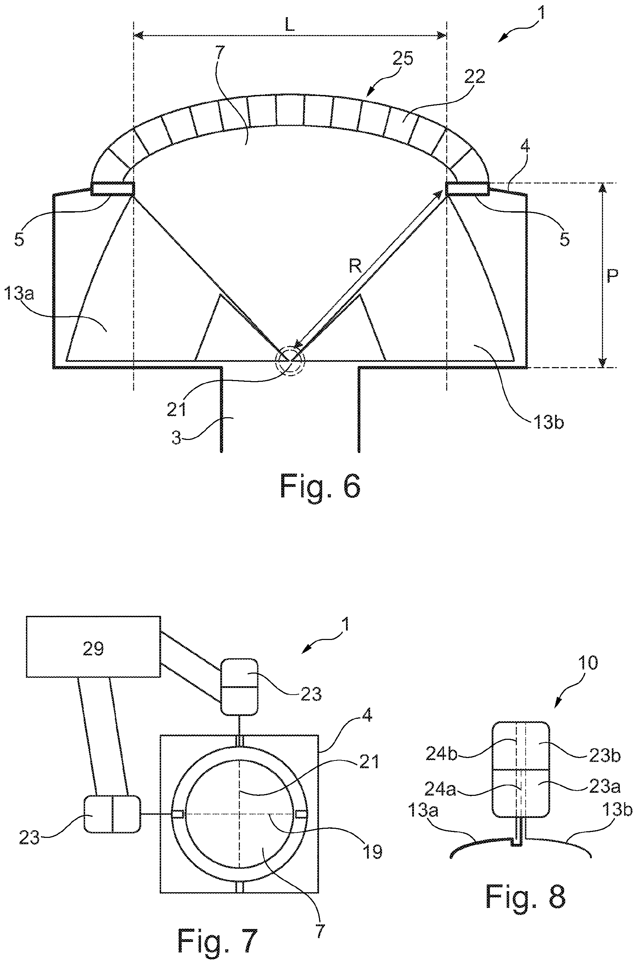

La deuxième paire de volets 13 est montée mobile en pivotement autour d'un deuxième axe commun de pivotement 21. Les volets 13a, 13b composant cette deuxième paire de volets 13 sont mobiles indépendamment l'un de l'autre autour de ce deuxième axe commun de pivotement 21. De plus, le deuxième axe commun de pivotement 21 est disposé selon une deuxième orientation par rapport à la section du boitier 4. Cette deuxième orientation est différente de la première orientation du premier axe commun de pivotement 19. Plus précisément, le deuxième axe commun de pivotement 21 présente une architecture horizontale selon le mode de réalisation particulier de la figure 1. En effet, pour que l'aérateur puisse orienter et/ou concentrer le flux d'air efficacement, il est nécessaire que le premier axe commun de pivotement 19 et le deuxième axe commun de pivotement 21 se croisent, selon l'angle de vue de face des figures 1 et 7. De préférence, la première orientation et la deuxième orientation des axes communs de pivotement 19, 21 sont perpendiculaires entre elles. La première paire de volets 11 est disposée en aval de la deuxième paire de volets 13 selon le sens de circulation du flux d'air. Le premier axe commun de pivotement 19 peut ainsi être à une profondeur supérieure ou égale au deuxième axe commun de pivotement 21 dans le boitier 4 selon l'angle de vue de la figure 2. La première 11 et la deuxième 13 paire de volets sont de préférence imbriquées l'une dans l'autre.

En référence aux figures 2 à 3B, la première paire de volets 11 et la deuxième paire de volets 13 sont disposées de sorte que la surface extérieure de la première paire de volets 11 et la surface intérieure de la deuxième paire de volets 13 sont séparées d'une distance d comprise entre 0,1 mm et 0,5 mm. La surface extérieure de la première paire de volets 11 correspond à la surface qui n'est pas en contact direct avec le flux d'air provenant du conduit de ventilation 3, alors que la surface intérieure de la deuxième paire de volets 13 correspond à la surface qui est en contact direct avec le flux d'air une fois que celui-ci à traversé la première paire de volets 11. La distance d entre la première paire de volets 11 et la deuxième paire de volets 13 doit être suffisante pour assurer le pivotement de chacun des volets 11a, 11b, 13a, 13b sans que les volets 11a, 11b de la première paire de volets 11 et les volets 13a, 13b de la deuxième paire de volets 13 ne se touchent. Cependant, si cette distance d est trop importante, il est possible que l'aérateur présente des pertes aérodynamiques importantes ce qui pourrait nuire à son efficacité. Selon le mode de réalisation particulier des figures 2 à 3B, les volets 11a, 11b portés par la première paire de volets 11 et les volets 13a, 13b portés par la deuxième paire de volets 13 sont concentriques, c'est-à-dire que la demi-sphère définie par la première paire de volets 11 et la demi-sphère définie par la deuxième paire de volets 13 présentent un centre commun.

Selon le mode de réalisation de la figure 2, le boîtier 4 présente une profondeur P comprise entre 30 et 40 mm et les volets 13a, 13b présentent un rayon R compris entre 40 et 50 mm. Ainsi, au moins les volets 13a, 13b de la deuxième paire de volets 13 peuvent faire saillie de l'ouverture de sortie 7 afin de pouvoir orienter aisément le flux d'air à n'importe quel endroit de l'habitacle. Par ailleurs, l'ouverture de sortie 7 présente une section de longueur L comprise entre 50 et 60 mm. Selon ce mode de réalisation particulier, les volets 11a, 11b de la première paire de volets 11 présentent des dimensions proches.

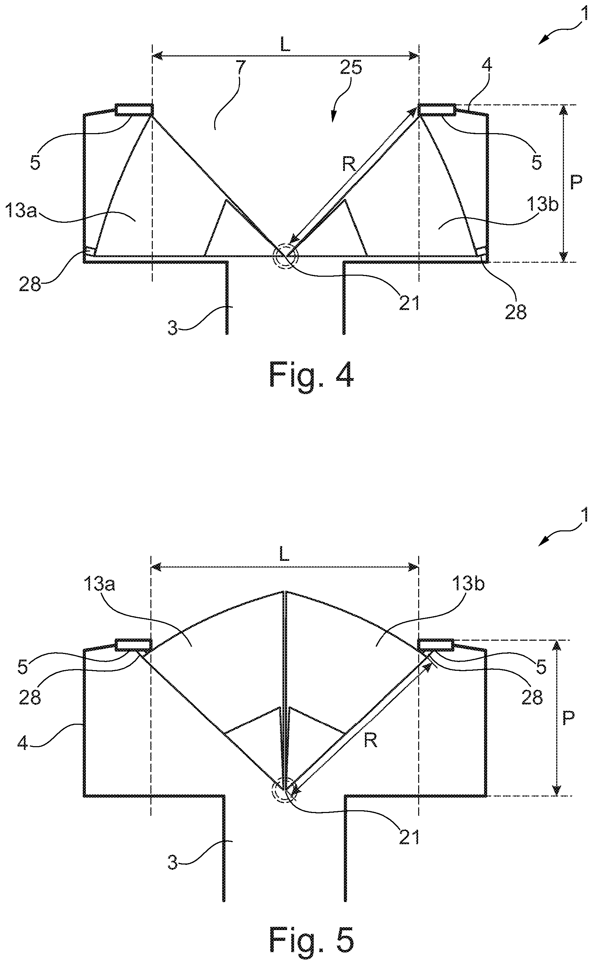

En référence aux figures 1 à 6, chaque paire de volets 11, 13 est mobile entre une position fermée (figure 5) dans laquelle au moins une paire de volets 11, 13 obstrue totalement l'ouverture de sortie 7 et une position ouverte (figures 4 et 6) dans laquelle les première 11 et deuxième 13 paires de volets libèrent une zone de soufflage 25 d'au moins 90 % de l'ouverture de sortie 7.

Les première 11 et deuxième 13 paires de volets passent par des positions intermédiaires définissant une ouverture intermédiaire (en référence aux figures 1 à 3B) entre leur position ouverte (visible sur les figures 4 et 6) et leur position fermée (visible sur la figure 5) dans lesquelles la position relative de chaque volet 11a, 11b, 13a, 13b est configurée pour définir une zone de soufflage 25, visible sur les figures 1, 3A et 3B, de taille inférieure à la zone de soufflage 25 en position ouverte, visible sur les figures 4 et 6. La taille et l'emplacement de cette zone de soufflage 25 au sein de l'ouverture de sortie 7 sont variables en fonction de la position relative de chaque volet 11a, 11b, 13a, 13b.

En effet, la taille de la zone de soufflage 25 influe sur la puissance du flux d'air à la sortie de l'aérateur 1, et l'emplacement de cette zone de soufflage 25 permet de diriger le flux d'air à l'intérieur de l'habitacle. Ces paramètres permettent de modifier la concentration du flux d'air. D'autre part, la forme de la zone de soufflage 25 permet d'influer sur la forme du flux d'air. Ainsi, la taille et l'emplacement de la zone de soufflage 25 permettent de contrôler la concentration du flux d'air, également appelée cône de diffusion du flux d'air, et sa forme à l'intérieur de l'habitacle du véhicule afin d'améliorer les prestations de confort thermique et d'assurer une meilleure individualisation et adaptation de la prestation à chaque passager du véhicule par exemple.

De plus, la modification de la zone de soufflage 25 permet de faire varier simultanément et de manière continue et progressive la concentration du flux d'air, la forme de ce flux d'air, ou encore la concentration et la forme de ce flux d'air de manière à ce que la prestation thermique s'adapte rapidement et progressivement à celle attendue par l'occupant de l'habitacle.

La forme en portion de calotte des volets 11a, 11b, 13a, 13b permet de définir une sphère afin de diriger le flux d'air. L'utilisation d'une sphère permet de diriger le flux d'air dans l'habitacle du véhicule selon les trois axes de l'espace. Avantageusement, lorsque la deuxième paire de volets 13 fait saillie de l'ouverture de sortie 7, l'angle de diffusion du flux d'air peut être maximal. Ainsi, la concentration du flux d'air à tout endroit de l'habitacle est possible.

Par ailleurs, un tel aérateur 1 permet de réduire la puissance électrique nécessaire au fonctionnement d'une telle installation pour assurer le confort des passagers à bord. En effet, la position relative de chaque volet 11a, 11b, 13a, 13b permet de modifier la concentration ou encore la forme du flux d'air indépendamment des conditions d'alimentation en amont dans le conduit de ventilation 3.

Avantageusement, lorsque la première orientation et la deuxième orientation des axes communs de pivotement 19, 21 sont perpendiculaires, le déplacement de la zone de soufflage 25 sur l'ensemble de l'ouverture de sortie 7 est facilité.

La zone de soufflage 25 en position intermédiaire peut présenter une taille comprise entre 5 % et 90 % de l'ouverture de sortie 7 et de préférence comprise entre 10 % et 60 % afin de pouvoir diriger et concentrer le flux d'air de manière optimale par exemple dans l'habitacle du véhicule pour adapter au mieux la prestation thermique aux souhaits des différents occupants.

La figure 4 est une représentation simplifiée des moyens d'obturation et de guidage 10 des figures 3A et 3B installés dans l'aérateur 1 selon un deuxième mode de réalisation. En référence à la figure 4, seule la deuxième paire de volets 13 est représentée afin de ne pas surcharger la figure. Selon ce mode de réalisation, les volets 13a, 13b de la deuxième paire de volets 13 sont en position ouverte afin de libérer l'ouverture de sortie 7.

La figure 5 est une représentation simplifiée des moyens d'obturation et de guidage 10 des figures 3A et 3B installés dans l'aérateur 1. En référence à la figure 5, seule la deuxième paire de volets 13 est représentée afin de ne pas surcharger la figure. Selon ce deuxième mode de réalisation, seule la deuxième paire de volets 13 est en position fermée afin d'empêcher le passage du flux d'air vers l'intérieur de l'habitacle du véhicule. Selon ce mode de réalisation particulier, la première paire de volets 11 peut rester en position ouverte ou en position intermédiaire.

Selon un autre mode de réalisation non représenté ici, la première paire de volets 11 et la deuxième paire de volets 13 peuvent être en position fermée afin d'empêcher le passage du flux d'air vers l'intérieur de l'habitacle du véhicule.

Selon un autre mode de réalisation non représenté ici, seule la première paire de volets 11 peut obstruer l'ouverture de sortie 7, la deuxième paire de volets 13 pouvant rester en position ouverte ou en position intermédiaire lorsqu'un occupant souhaite bloquer le passage du flux d'air vers l'intérieur de l'habitacle du véhicule.

Pour que l'obturation de l'ouverture de sortie 7 soit efficace, les volets 11a, 11b de la première paire de volets 11 ou les volets 13a, 13b de la deuxième paire de volets 13 présentent chacun une surface d'au moins 60 % de la surface de l'ouverture de sortie 7.

De manière optionnelle selon le mode de réalisation particulier des figures 4 et 5, les volets 13a, 13b de la deuxième paire de volets 13 peuvent porter un dispositif d'étanchéité additionnel 28. Ce dispositif d'étanchéité additionnel 28 est configuré pour venir au contact d'une paroi interne 5 de l'ouverture de sortie 7 afin de bloquer le flux d'air circulant dans le boitier 4 qui peut être susceptible de passer entre la paroi interne 5 de l'ouverture de sortie 7 et les volets 13a, 13b.

En variante selon un mode de réalisation non représenté, la paroi interne 5 de l'ouverture de sortie 7 peut présenter un dispositif d'étanchéité supplémentaire disposé sur le pourtour de cette paroi interne 5 et au contact de la deuxième paire de volets 13. Ce dispositif d'étanchéité supplémentaire est configuré pour empêcher le flux d'air de passer entre la paroi latérale des volets 13a, 13b de la deuxième paire de volets 13 et la paroi interne 5 de l'ouverture de sortie 7.

La figure 6 est une représentation simplifiée des moyens d'obturation et de guidage 10 des figures 3A et 3B installés dans l'aérateur 1 selon un troisième mode de réalisation. En référence à la figure 6, seule la deuxième paire de volets 13 est représentée afin de ne pas surcharger la figure. Selon ce mode de réalisation, les volets 13a, 13b de la deuxième paire de volets 13 sont en position ouverte afin de libérer l'ouverture de sortie 7. Selon le mode de réalisation particulier de la figure 6, l'ouverture de sortie 7 peut présenter une grille hémisphérique 22 disposée en aval de la deuxième paire de volets 13 dans le flux d'air. Selon ce mode de réalisation particulier, la grille hémisphérique 22 est disposée plus particulièrement à l'extérieur du boitier 4 et elle est fixée sur ce boitier 4. Cette grille hémisphérique 22 est configurée pour redresser l'écoulement du flux d'air sortant de l'aérateur 1 à destination de l'habitacle afin de permettre une bonne focalisation du flux d'air. De plus, cette grille hémisphérique 22 est disposée en aval de la deuxième paire de volets 13 dans le flux d'air. Selon le mode de réalisation particulier de la figure 6, la grille hémisphérique 22 peut être une grille nid d'abeille.

Selon un autre mode de réalisation non représenté ici, la grille hémisphérique 22 peut être disposée à l'intérieur du boitier 4 au centre des moyens d'obturation et de guidage 10. Selon ce mode de réalisation particulier, la grille hémisphérique 22 est disposée en amont de la première paire de volets 11 dans le flux d'air. Par ailleurs, selon ce mode de réalisation particulier, la grille hémisphérique 22 peut être reliée à un élément fixe à l'intérieur des moyens d'obturation et de guidage 10, comme par exemple le premier axe de pivotement 19 ou encore le deuxième axe de pivotement 21, afin d'assurer sa fixation à l'intérieur des moyens d'obturation et de guidage 10.

Selon les modes de réalisation particuliers des figures 4 et 6, lorsque la première paire de volets 11 est également en position ouverte, le flux d'air arrive dans l'habitacle du véhicule sans être concentré ou encore dirigé.

En référence aux figures 7 et 8, l'aérateur 1 comporte pour chaque volet 11a, 11b, 13a, 13b un actionneur 23 associé configuré pour faire pivoter ledit volet indépendamment de l'autre volet de la même paire de volets.

En référence à la figure 7, le boitier 4 présente deux doubles actionneurs 23 disposés au niveau d'une extrémité des axes communs de pivotement 19, 21 de chaque paire de volets 11, 13 afin de faire pivoter un volet 11a, 11b, 13a, 13b indépendamment de l'autre volet 11a, 11b, 13a, 13b d'une paire de volets 11, 13.

En référence à la figure 7, les actionneurs 23 sont reliés à une unité électronique de contrôle 29. L'unité électronique de contrôle 29 est configurée pour piloter les différents actionneurs 23 afin de faire pivoter les volets 11a, 11b, 13a, 13b de manière indépendante pour déplacer la zone de soufflage 25 afin de modifier la concentration ou encore la forme du flux d'air dans l'habitacle du véhicule par exemple.

Selon un autre mode de réalisation non représenté ici, les actionneurs 23 peuvent être reliés à des commandes manuelles présentes à l'intérieur de l'habitacle. Les commandes manuelles peuvent être actionnées par un occupant du véhicule afin de diriger le flux d'air dans l'habitacle du véhicule et/ou pour modifier sa concentration par exemple.

Selon le mode de réalisation de la figure 7, l'unité électronique de contrôle 29 peut être pilotée suivant les instructions données par un des passagers et saisies sur un tableau de commande (non représenté) disposé à l'intérieur de l'habitacle du véhicule et configuré pour piloter la direction, l'orientation, ou encore la concentration du flux d'air à l'intérieur de l'habitacle.

Par exemple, lorsque l'aérateur 1 est installé pour remplir une fonction de désembuage, l'unité électronique de contrôle 29 peut piloter les différents volets 11a, 11b, 13a, 13b pour qu'une lame d'air par exemple mobile en balayant le pare-brise, sur tout ou partie du pare-brise, soit projetée sur le pare-brise ou sur la vitre à désembuer afin que cette opération soit plus rapide.

Par ailleurs, lorsque l'aérateur 1 est installé au niveau d'une console centrale à l'avant ou à l'arrière du véhicule, l'unité électronique de contrôle 29 peut être configurée pour piloter les différents volets 11a, 11b, 13a, 13b pour qu'une lame d'air mobile soit projetée à l'intérieur de l'habitacle de manière horizontale, de sorte que les passagers perçoivent une diffusion dynamique de ce flux d'air, c'est-à-dire que les passagers ressentent un balayage horizontal de ce flux d'air, afin d'augmenter la qualité de la prestation thermique d'un tel aérateur 1 et le confort à bord du véhicule des passagers. On entend par horizontal, une orientation parallèle à l'horizon.

Selon une autre variante, l'unité électronique de contrôle 29 peut arriver à détecter la position des passagers dans l'habitacle afin de détecter l'emplacement de chaque passager, afin qu'elle puisse orienter et adapter le flux d'air en fonction de l'emplacement de ces différents passagers, de leur taille, et de leurs besoins par exemple. Cette variante peut notamment être adaptée pour les véhicules autonomes dans lesquels les passagers pourront éventuellement être amenés à se déplacer.

En référence à la figure 8, il est représenté un moyen de coopération 24 de la deuxième paire de volets 13. Plus précisément, le volet 13b présente une extension creuse de forme cylindrique 24b reliée à l'actionneur 23b configuré pour faire pivoter le volet 13b. Le volet 13a présente quant à lui une extension en forme de tige 24a destinée à coopérer avec la forme cylindrique 24b afin de permettre aux volets 13a, 13b de la deuxième paire de volets 13 de coopérer. Cette tige 24a est reliée à l'actionneur 23a configuré pour faire pivoter le volet 13a. La première paire de volets 11 présente le même moyen de coopération 24 afin de permettre le pivotement d'un volet 11a, 11b indépendamment de l'autre volet 11a, 11b de cette même première paire de volets 11.

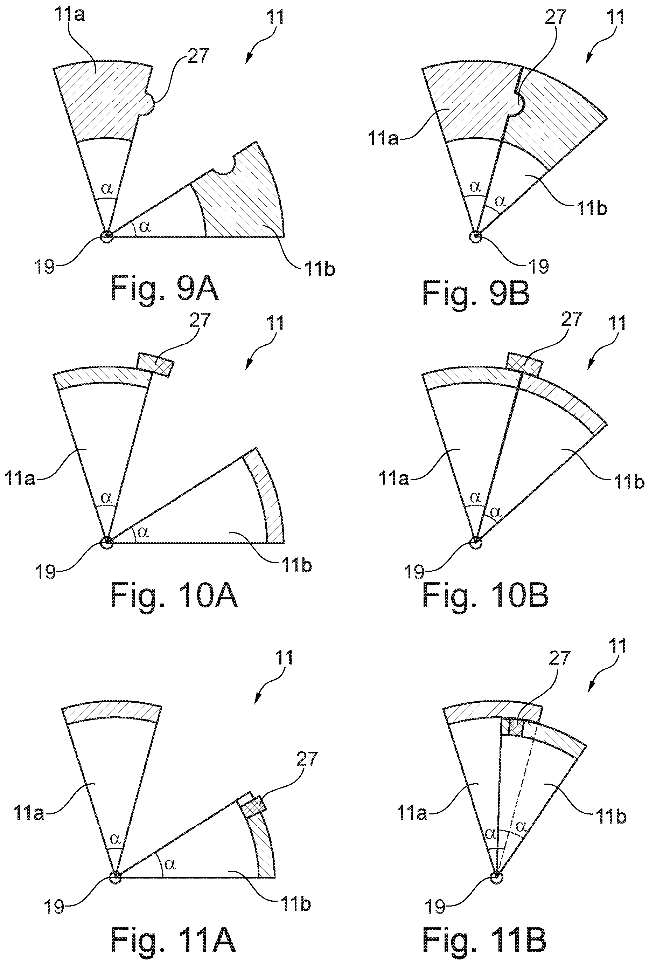

Par ailleurs, afin d'assurer une bonne étanchéité au flux d'air provenant du conduit de ventilation 3, les volets 11a, 11b d'au moins la première paire de volets 11 peuvent porter un dispositif d'étanchéité 27 configuré pour empêcher le passage du flux d'air lorsque la première paire de volets 11 est en position fermée, comme cela est représenté en référence aux figures 9A à 11B. Les dispositifs d'étanchéité en référence aux figures 9A à 11B peuvent également être portés par la deuxième paire de volets 13.

Avantageusement, la première paire de volets 11 et la deuxième paire de volets 13 présentent un dispositif d'étanchéité 27 de sorte qu'une seule des deux paires de volets 11, 13 puisse obstruer hermétiquement l'ouverture de sortie 7.

En référence aux figures 9A et 9B, le dispositif d'étanchéité 27 peut correspondre à des formes complémentaires au niveau de la tranche des volets destinées à coopérer lorsque la paire de volets est en position fermée (figure 9B). Dans une telle configuration, les formes complémentaires s'étendent sur toute la hauteur de la paire de volets qui les porte. On entend par hauteur du volet la distance entre les deux points de passage de l'axe de pivotement d'une paire de volets au niveau de la tranche de cette paire de volets.

De manière alternative en référence aux figures 10A et 10B, le dispositif d'étanchéité 27 peut correspondre à une lèvre radiale portée par l'un des deux volets de ladite paire de volets. Selon le mode de réalisation particulier décrit en référence à la figure 10A, il s'agit du volet 11a de la première paire de volets 11 qui présente cette lèvre radiale. De plus, cette lèvre radiale s'étend sur l'ensemble de la hauteur du volet 11a. Par ailleurs, cette lèvre radiale est réalisée en un matériau étanche à l'air, comme par exemple du caoutchouc, du plastique, du tissu, ou encore tout type de matériau étanche à l'air connu de l'homme de l'art.

Selon un autre mode de réalisation non représenté ici, cette lèvre radiale peut être portée par le volet 11b de la première paire de volets 11.

Selon un autre mode de réalisation non représenté ici, un volet de la première paire de volets 11 et un volet de la deuxième paire de volets 13 peuvent porter cette lèvre radiale.

En référence à la figure 10B, lorsque la première paire de volets 11 est en position fermée, la lèvre radiale recouvre l'interstice présent entre les volets 11a, 11b et est en contact avec la surface externe du volet 11b de cette première paire de volets 11 afin de bloquer tout passage du flux d'air vers l'intérieur de l'habitacle du véhicule. Selon ce mode de réalisation, on entend par surface externe, la surface qui n'est pas en contact direct avec le flux d'air arrivant du conduit de ventilation 3.

Selon une autre variante en référence aux figures 11A et 11B, les volets 11a, 11b d'au moins la première paire de volets 11 peuvent être montés de façon imbriquée. Selon le mode de réalisation particulier de la figure 11A, le volet 11a présente un rayon légèrement supérieur à celui du volet 11b. Par ailleurs, le volet 11b présente un joint d'étanchéité au niveau de sa surface extérieure comme dispositif d'étanchéité 27. En référence à la figure 11B, le joint d'étanchéité présente une hauteur suffisante pour combler l'interstice entre les volets 11a, 11b de sorte que le flux d'air reste confiné dans le boitier 4 lorsque la première paire de volets 11 est en position fermée. Ce joint d'étanchéité peut, comme la lèvre radiale des figures 10A et 10B, être composé en un matériau étanche à l'air. De plus, ce joint d'étanchéité s'étend sur toute la hauteur du volet qui le porte.

En référence au figures 9A à 11B, les volets 11a, 11b, 13a, 13b d'une même paire de volets 11, 13 présentent un rayon R proche, de préférence identique (en référence aux figures 9A à 10B) à ± 5 % (en référence aux figures 11A et 11B).

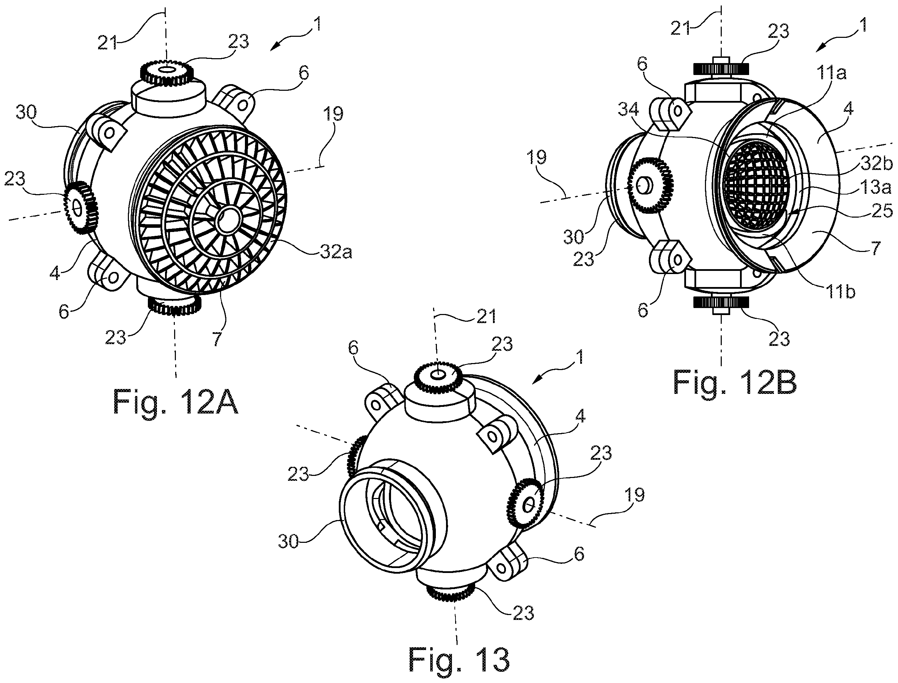

En référence aux figures 12A à 13, il est représenté l'aérateur 1 selon un quatrième mode de réalisation. Selon cette variante, les différents actionneurs 23 des paires de volets 11, 13 sont disposés à l'extérieur du boitier 4. Plus particulièrement, le boitier 4 présente quatre actionneurs 23, qui correspondent ici à des pignons, disposés aux extrémités des axes communs de pivotement 19, 21, chaque actionneur 23 commandant le pivotement d'un volet 11a, 11b, 13a, 13b. Selon ce mode de réalisation, le pivotement des volets 11a, 11b, 13a, 13b peut être piloté aisément depuis l'extérieur afin de modifier leur position relative pour déplacer la zone de soufflage 25 afin d'orienter ou de concentrer le flux d'air soit manuellement soit à l'aide de l'unité électronique de contrôle. A contrario du mode de réalisation de la figure 8, chaque actionneur 23 est relié à une extrémité d'un axe commun de pivotement 19, 21 et pilote un volet 11a, 11b, 13a, 13b distinct.

Selon ces exemples, la partie arrière du boitier 4 présente des moyens de raccordement 30 configurés pour coopérer avec le conduit de ventilation (non représenté sur ces figures) de manière à assurer le raccord du boitier 4 au conduit de ventilation, qui sont dans ce cas deux éléments distincts. Par ailleurs, le boitier 4 présente des moyens de fixation 6 de l'aérateur 1 à l'intérieur d'un élément composant l'habitacle du véhicule, comme par exemple à l'intérieur de la planche de bord.

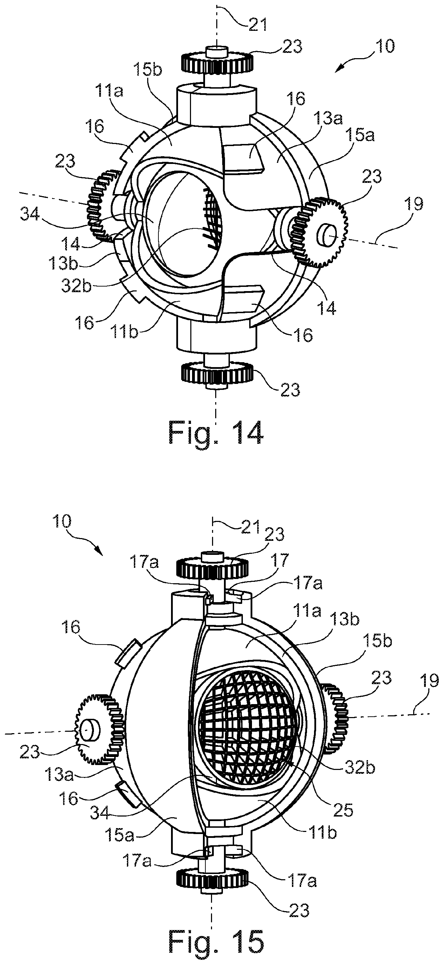

Selon le quatrième mode de réalisation particulier illustré par la figure 12A, l'aérateur 1 présente une première grille hémisphérique 32a disposée en aval de la deuxième paire de volets 13 des moyens d'obturation et de guidage 10 (visibles sur les figures 14 et 15) dans le flux d'air.

Comme illustré par la figure 12B, l'aérateur 1 comprend une deuxième grille hémisphérique 32b disposée au niveau d'une chambre interne 34 à l'intérieur du boitier 4 au centre des moyens d'obturation et de guidage 10 (visibles sur les figures 14 et 15) et plus particulièrement en amont de la première paire de volets 11 dans le flux d'air. Selon ce mode de réalisation, la chambre interne 34 peut être reliée à un élément fixe à l'intérieur des moyens d'obturation et de guidage 10 comme par exemple le premier axe commun de pivotement 19 ou encore le deuxième axe commun de pivotement 21 afin d'assurer sa fixation à l'intérieur des moyens d'obturation et de guidage 10 du flux d'air.

Selon le mode de réalisation représenté aux figures 12A à 13, le boitier 4 est relié au conduit de ventilation du véhicule. Selon un autre mode de réalisation non représenté ici, la chambre interne 34 est raccordée au conduit de ventilation. Dans une telle configuration, les moyens de raccordement 30 peuvent être présents et jouer un rôle de gaîne par exemple pour le conduit de ventilation.

En référence aux figures 14 et 15, il est représenté les moyens d'obturation et de guidage 10 du flux d'air comprenant la chambre interne 34 supportant la deuxième grille hémisphérique 32b selon le quatrième mode de réalisation. Cette deuxième grille hémisphérique 32b ainsi que la chambre interne 34 peuvent être présentes ou non. La description des moyens d'obturation et de guidage 10 suivante et leur fonctionnement reste la même que la chambre interne 34 supportant la deuxième grille hémisphérique 32b soit présente à l'intérieur des moyens d'obturation et de guidage 10 ou non.

En référence à la figure 14, les volets 13a, 13b de la deuxième paire de volets 13 présentent chacun une échancrure 14. Cette échancrure 14 prend naissance du côté opposé à la zone de soufflage 25 (visible sur la figure 15) et s'étend en direction de celle-ci perpendiculairement au deuxième axe commun de pivotement 21. L'échancrure 14 est configurée pour permettre le passage du premier axe commun de pivotement 19 de la première paire de volets 11 de sorte que les volets 11a, 11b sont pilotés depuis l'extérieur des moyens de guidage et d'obturation 10 du flux d'air pour définir leur position relative afin de modifier la forme et la dimension de la zone de soufflage 25.

Selon ce quatrième mode de réalisation, les moyens d'obturation et de guidage 10 présentent en outre une troisième paire de volets 15 optionnelle disposée au contact des volets 13a, 13b de la deuxième paire de volets 13 (visible sur la figure 15). La troisième paire de volets 15 est configurée pour masquer les échancrures 14 de la deuxième paire de volets 13 afin de limiter les fuites d'air latérales au niveau de l'ouverture de sortie 7 lorsque les volets 13a, 13b sont en position fermée ou en position intermédiaire. Pour limiter de manière efficace ces fuites d'air, les volets 15a, 15b de la troisième paire de volets 15 sont disposés entre l'actionneur 23 de la première paire de volets 11 et la zone de soufflage 25.

Selon ces modes de réalisation, la troisième paire de volets 15 est disposée mobile autour du deuxième axe commune de pivotement 21 afin de pouvoir accompagner en partie le mouvement de pivotement des volets 13a, 13b de la deuxième paire de volets 13. Selon les modes de réalisation particuliers représentés en référence aux figures 14 et 15, les volets 13a, 13b de la deuxième paire de volets 13 présentent chacun une butée 16 disposée sur leur pourtour externe au niveau de leur extrémité amont. Chaque butée 16 est configurée pour pousser le volet 15a, 15b de la troisième paire de volets 15 de sorte qu'ils masquent l'échancrure 14 présente sur chacun des volets 13a, 13b de la deuxième paire de volets 13.

Avantageusement, la troisième paire de volets 15 est maintenue en place sur le deuxième axe commun de pivotement 21 à l'aide d'un anneau élastique 17 disposé à chaque extrémité du deuxième axe commun de pivotement 21. Selon ce mode de réalisation, l'anneau élastique 17 présente une partie circulaire comportant une ouverture et deux pattes 17a disposées de part et d'autre de cette ouverture. Selon cet exemple, les pattes 17a forment un angle d'environ 90° avec la partie circulaire de l'anneau élastique 17. Par ailleurs, chaque patte 17a est en contact avec l'extrémité aval d'un volet 15a, 15b de la troisième paire de volets 15 au niveau du deuxième axe commun de pivotement 21. Les pattes 17a sont configurées pour assurer le retour des volets 15a, 15b de la troisième paire de volets 15 lorsque les volets 13a, 13b de la deuxième paire de volets 13 passent en position ouverte de manière à libérer l'ouverture de sortie 7 de l'aérateur 1. Selon ce mode de réalisation, les points de liaison des pattes 17a avec la partie circulaire de l'anneau élastique 17 se touchent lorsque les volets 13a, 13b de la deuxième paire de volets 13 sont en position fermée.

Selon un autre mode de réalisation non représenté ici, l'anneau élastique 17 peut être remplacé par une bague ressort configurée pour avoir un fonctionnement proche de celui de l'anneau élastique 17 décrit ci-dessus.

Selon une variante non représentée ici, les volets 13a, 13b de la deuxième paire de volets 13 peuvent présenter une butée au niveau de leur extrémité aval configurée pour ramener les volets 15a, 15b de la troisième paire de volets 15 en position ouverte lors de leur déplacement de leur position fermée vers leur position ouverte.

Selon encore un autre mode de réalisation non représenté ici, les volets 15a, 15b de la troisième paire de volets 15 peuvent être mis en pivotement à l'aide d'un actionneur dédié piloté ou non par l'unité électronique de contrôle.

Ces exemples de réalisation sont fournis à titre d'exemple illustratif et non limitatif. En effet, il est tout à fait possible pour l'homme de l'art sans sortir du cadre de la présente invention de remplacer les dispositifs d'étanchéité décrits ici par d'autres types de dispositifs d'étanchéité. Par ailleurs il est tout à fait possible pour l'homme de l'art d'utiliser des volets présentant une autre forme qu'une forme en portion de calotte, ces formes permettant aux deux paires de coopérer entre elles pour orienter et concentrer le flux d'air. Ensuite, les différents modes de réalisation décrits mettent en œuvre deux paires de volets afin d'orienter le flux d'air, cependant il est tout à fait possible pour l'homme de l'art sans sortir du cadre de la présente invention d'utiliser plus de deux paires de volets. De plus, l'homme de l'art pourra aisément modifier la distance entre la surface interne de la première paire de volets 11 et la surface externe de la deuxième paire de volets 13 sans sortir du cadre de la présente invention. De même, il pourra également utiliser une première paire de volets 11 présentant une courbure dirigée vers l'intérieur du conduit de ventilation 3 et une deuxième paire de volets 13 présentant une courbure dirigée vers l'ouverture de sortie 7 par exemple tout en restant dans le cadre de la présente invention. Par ailleurs, l'homme de l'art pourra utiliser tout autre moyen permettant de ramener les volets 15a, 15b de la troisième paire de volets 15 en position ouverte lorsque les volets 13a, 13b de la deuxième paire de volets 13 retournent en position ouverte que ceux décrits ici.

Ainsi, la diminution de la puissance électrique nécessaire pour assurer le confort d'un occupant dans l'habitacle d'un véhicule ainsi qu'une bonne individualisation et adaptation de la prestation thermique à chaque passager, tout en limitant le nombre de pièces nécessaires pour un tel aérateur 1, est possible grâce à l'aérateur 1 présentant une première paire de volets 11 et une deuxième paire de volets 13 en forme de portion de calotte, chaque volet 11a, 11b, 13a, 13b étant commandé de manière indépendante afin de déplacer la zone de soufflage 25 sur l'ouverture de sortie 7 de cet aérateur 1.

## Revendications

1. Aérateur (1), notamment pour un véhicule automobile, configuré pour orienter un flux d'air amené par un conduit de ventilation (3) qui s'étend en arrière dudit aérateur (1), ledit aérateur (1) comprenant :
• un boitier (4) destiné à être raccordé au conduit de ventilation (3) et présentant une ouverture de sortie (7) configurée pour permettre le passage du flux d'air amené par le conduit de ventilation (3) vers l'intérieur de l'habitacle du véhicule, et
• des moyens d'obturation et de guidage (10) du flux d'air,
dans lequel :
• les moyens d'obturation et de guidage (10) comportent une première (11) et une deuxième (13) paires de volets pivotants, la deuxième paire de volets (13) étant disposée en aval de la première paire de volets (11) par rapport au flux d'air,
• la première paire de volets (11) est montée mobile en pivotement autour d'un premier axe commun de pivotement (19),
**caractérisé en ce que** :
• la deuxième paire de volets (13) est montée mobile en pivotement autour d'un deuxième axe commun de pivotement (21).

2. Aérateur (1) selon la revendication précédente **caractérisé en ce que** les moyens d'obturation et de guidage (10) sont disposés à l'intérieur du boitier (4) et font saillie de l'ouverture de sortie (7).

3. Aérateur (1) selon l'une quelconque des revendications précédentes, **caractérisé en ce que** les volets (11a, 11b) de la première paire de volets (11) sont mobiles indépendamment l'un de l'autre et les volets (13a, 13b) de la deuxième paire de volets (13) sont mobiles indépendamment l'un de l'autre.

4. Aérateur (1) selon l'une quelconque des revendications précédentes, **caractérisé en ce que** ledit premier axe commun de pivotement (19) est disposé selon une première orientation par rapport à la section du boitier (4) et ledit deuxième axe commun de pivotement (21) est disposé selon une deuxième orientation par rapport à la section du boitier (4), ladite deuxième orientation étant différente de la première orientation.

5. Aérateur (1) selon la revendication 4, **caractérisé en ce que** la première orientation et la deuxième orientation des axes communs de pivotement (19, 21) sont perpendiculaires entre elles.

6. Aérateur (1) selon l'une quelconque des revendications précédentes, **caractérisé en ce qu'**il comporte pour chaque volet (11a, 11b, 13a, 13b) un actionneur (23) associé configuré pour faire pivoter ledit volet indépendamment de l'autre volet de la même paire, chaque paire de volets (11, 13) étant mobile entre une position fermée dans laquelle la paire de volets (11, 13) obstrue totalement l'ouverture de sortie (7) et une position ouverte dans laquelle la paire de volets (11, 13) libère l'ouverture de sortie (7), en passant par toute positions intermédiaires dans lesquelles la position relative de chaque volet (11a, 11b, 13a, 13b) est configurée pour définir une zone de soufflage (25) dont la taille et l'emplacement au sein de l'ouverture de sortie (7) sont variables en fonction de la position de chaque volet (11a, 11b, 13a, 13b).

7. Aérateur (1) selon l'une quelconque des revendications précédentes, **caractérisé en ce que** les volets (11a, 11b, 13a, 13b) de la première paire de volets (11) et de la deuxième paire de volets (13) présentent chacun une surface d'au moins 60 % de la surface de l'ouverture de sortie (7).

8. Aérateur (1) selon l'une quelconque des revendications précédentes, **caractérisé en ce que** les volets (11a, 11b) d'au moins la première paire de volets (11) sont montés de façon imbriquée.

9. Aérateur (1) selon l'une quelconque des revendications précédentes, **caractérisé en ce que** la première paire de volets (11) et la deuxième paire de volets (13) sont imbriquées l'une dans l'autre.

10. Aérateur (1) selon l'une quelconque des revendications 8 ou 9, **caractérisé en ce que** les volets (11a, 11b) portés par la première paire de volets (11) et les volets (13a, 13b) portés par la deuxième paire de volets (13) sont concentriques.

11. Aérateur (1) selon l'une quelconque des revendications précédentes, **caractérisé en ce que** les volets (11a, 11b, 13a, 13b) d'une même paire de volets (11, 13) présentent un rayon proche, de préférence identique à ± 5 %.

12. Aérateur (1) selon la revendication 6, **caractérisé en ce que** les volets (13a, 13b) de la deuxième paire de volets (13) présentent chacun une échancrure (14) prenant naissance du côté opposé à la zone de soufflage (25) et s'étendant en direction de la zone de soufflage (25), ladite échancrure (14) étant configurée pour permettre le passage du premier axe commun de pivotement (19) de la première paire de volets (11) afin d'assurer l'entraînement des volets (11a, 11b) de la première paire de volets (11) depuis l'extérieur des moyens d'obturation et de guidage (10).

13. Aérateur (1) selon la revendication 12, **caractérisé en ce que** les moyens d'obturation et de guidage (10) présentent en outre une troisième paire de volets (15) disposée au contact des volets (13a, 13b) de la deuxième paire de volets (13) entre l'actionneur (23) de la première paire de volets (11) et la zone de soufflage (25) et disposée mobile autour du deuxième axe commun de pivotement (21), les volets (15a, 15b) de la troisième paire de volets (15) étant configurés pour masquer les échancrures (14) de la deuxième paire de volets (13) afin de limiter les fuites d'air latérales au niveau de l'ouverture de sortie (7) lorsque les volets (13a, 13b) de la deuxième paire de volets (13) sont en position fermée ou en position intermédiaire.

14. Aérateur (1) selon l'une quelconque des revendications précédentes, **caractérisé en ce que** l'ouverture de sortie (7) présente une grille hémisphérique (22) configurée pour redresser l'écoulement du flux d'air.

15. Aérateur (1) selon la revendication 14, **caractérisé en ce que** la grille hémisphérique (22) est disposée en amont de la première paire de volets (11) dans le flux d'air.

16. Aérateur (1) selon la revendication 14, **caractérisé en ce que** la grille hémisphérique (22) est disposée en aval de la deuxième paire de volets (13) dans le flux d'air.

## Patentansprüche

1. Lufttrichter (1), insbesondere für ein Kraftfahrzeug, der dazu konfiguriert ist, einen durch einen Lüftungskanal (3), der sich hinter dem Lufttrichter (1) befindet, geführten Luftstrom, zu richten, wobei der Lufttrichter (1) Folgendes umfasst:
• ein Gehäuse (4), das dazu bestimmt ist, mit dem Lüftungskanal (3) verbunden zu sein, und eine Auslassöffnung (7) aufweist, die konfiguriert ist, um den Durchgang des durch den Lüftungskanal (3) geführten Luftstroms in das Innere des Fahrgastraums des Fahrzeugs zu ermöglichen, und
• Mittel (10) zum Absperren und Führen des Luftstroms,
wobei:
• die Absperr- und Führungsmittel (10) ein erstes (11) und ein zweites (13) Paar schwenkbarer Klappen umfassen, wobei das zweite Klappenpaar (13) in Bezug auf den Luftstrom stromabwärts des ersten Klappenpaars (11) angeordnet ist,
• das erste Klappenpaar (11) um eine erste gemeinsame Schwenkachse (19) schwenkbar montiert ist,
**dadurch gekennzeichnet, dass**:
• das zweite Klappenpaar (13) um eine zweite gemeinsame Schwenkachse (21) schwenkbar montiert ist.

2. Lufttrichter (1) nach dem vorangehenden Anspruch, **dadurch gekennzeichnet, dass** die Absperr- und Führungsmittel (10) innerhalb des Gehäuses (4) angeordnet sind und von der Auslassöffnung (7) vorstehen.

3. Lufttrichter (1) nach einem der vorangehenden Ansprüche, **dadurch gekennzeichnet, dass** die Klappen (11a, 11b) des ersten Klappenpaars (11) unabhängig voneinander bewegbar sind und die Klappen (13a, 13b) des zweiten Klappenpaars (13) unabhängig voneinander bewegbar sind.

4. Lufttrichter (1) nach einem der vorangehenden Ansprüche, **dadurch gekennzeichnet, dass** die erste gemeinsame Schwenkachse (19) in einer ersten Ausrichtung in Bezug auf den Querschnitt des Gehäuses (4) angeordnet ist und die zweite gemeinsame Schwenkachse (21) in einer zweiten Ausrichtung in Bezug auf den Querschnitt des Gehäuses (4) angeordnet ist, wobei sich die zweite Ausrichtung von der ersten Ausrichtung unterscheidet.

5. Lufttrichter (1) nach Anspruch 4, **dadurch gekennzeichnet, dass** die erste Ausrichtung und die zweite Ausrichtung der gemeinsamen Schwenkachsen (19, 21) senkrecht zueinander sind.

6. Lufttrichter (1) nach einem der vorangehenden Ansprüche, **dadurch gekennzeichnet, dass** er für jede Klappe (11a, 11b, 13a, 13b) einen zugeordneten Aktor (23) umfasst, der konfiguriert ist, um die Klappe unabhängig von der anderen Klappe desselben Paars zu drehen, wobei jedes Klappenpaar (11, 13) zwischen einer geschlossenen Stellung, in der das Klappenpaar (11, 13) die Auslassöffnung (7) vollständig versperrt, über alle Zwischenstellungen, in denen die relative Stellung jeder Klappe (11a, 11b, 13a, 13b) konfiguriert ist, um einen Ausblasbereich (25) zu definieren, dessen Größe und Lage innerhalb der Auslassöffnung (7) in Abhängigkeit von der Position jeder Klappe (11a, 11b, 13a, 13b) variabel sind, und einer offenen Stellung, in der das Klappenpaar (11, 13) die Auslassöffnung (7) freigibt, bewegbar ist.

7. Lufttrichter (1) nach einem der vorangehenden Ansprüche, **dadurch gekennzeichnet, dass** die Klappen (11a, 11b, 13a, 13b) des ersten Klappenpaars (11) und des zweiten Klappenpaars (13) jeweils eine Fläche von mindestens 60 % der Fläche der Auslassöffnung (7) aufweisen.

8. Lufttrichter (1) nach einem der vorangehenden Ansprüche, **dadurch gekennzeichnet, dass** die Klappen (11a, 11b) zumindest des ersten Klappenpaars (11) ineinandergreifend montiert sind.

9. Lufttrichter (1) nach einem der vorangehenden Ansprüche, **dadurch gekennzeichnet, dass** das erste Klappenpaar (11) und das zweite Klappenpaar (13) ineinandergreifen.

10. Lufttrichter (1) nach einem der Ansprüche 8 oder 9, **dadurch gekennzeichnet, dass** die vom ersten Klappenpaar (11) getragenen Klappen (11a, 11b) und die vom zweiten Klappenpaar (13) getragenen Klappen (13a, 13b) konzentrisch sind.

11. Lufttrichter (1) nach einem der vorangehenden Ansprüche, **dadurch gekennzeichnet, dass** die Klappen (11a, 11b, 13a, 13b) eines gleichen Klappenpaars (11, 13) einen Radius aufweisen, der ähnlich, vorzugsweise identisch ± 5 % ist.

12. Lufttrichter (1) nach Anspruch 6, **dadurch gekennzeichnet, dass** die Klappen (13a, 13b) des zweiten Klappenpaars (13) jeweils einen Ausschnitt (14) aufweisen, der von der dem Ausblasbereich (25) entgegengesetzten Seite ausgeht und sich in Richtung des Ausblasbereichs (25) erstreckt, wobei der Ausschnitt (14) konfiguriert ist, um den Durchgang der ersten gemeinsamen Schwenkachse (19) des ersten Klappenpaars (11) zu ermöglichen, um den Antrieb der Klappen (11a, 11b) des ersten Klappenpaars (11) von außerhalb der Absperr- und Führungsmittel (10) zu gewährleisten.

13. Lufttrichter (1) nach Anspruch 12, **dadurch gekennzeichnet, dass** die Absperr- und Führungsmittel (10) ferner ein drittes Klappenpaar (15) aufweisen, das in Kontakt mit den Klappen (13a, 13b) des zweiten Klappenpaars (13) zwischen dem Aktor (23) des ersten Klappenpaars (11) und dem Ausblasbereich (25) angeordnet ist und um die zweite gemeinsame Schwenkachse (21) bewegbar angeordnet ist, wobei die Klappen (15a, 15b) des dritten Klappenpaars (15) konfiguriert sind, um die Ausschnitte (14) des zweiten Klappenpaars (13) zu verdecken, um das seitliche Austreten von Luft im Bereich der Auslassöffnung (7) zu begrenzen, wenn sich die Klappen (13a, 13b) des zweiten Klappenpaars (13) in der geschlossenen Stellung oder in der Zwischenstellung befinden.

14. Lufttrichter (1) nach einem der vorangehenden Ansprüche, **dadurch gekennzeichnet, dass** die Auslassöffnung (7) ein halbkugelförmiges Gitter (22) aufweist, das konfiguriert ist, um den Luftstrom zu begradigen.

15. Lufttrichter (1) nach Anspruch 14, **dadurch gekennzeichnet, dass** das halbkugelförmige Gitter (22) stromabwärts des ersten Klappenpaars (11) im Luftstrom angeordnet ist.

16. Lufttrichter (1) nach Anspruch 14, **dadurch gekennzeichnet, dass** das halbkugelförmige Gitter (22) stromabwärts des zweiten Klappenpaars (13) im Luftstrom angeordnet ist.

## Claims

1. Diffuser (1), in particular for a motor vehicle, configured to direct a flow of air conveyed via a ventilation duct (3) which extends to the rear of said diffuser (1), said diffuser (1) comprising:
• a housing (4) intended to be connected to the ventilation duct (3) and having an outlet opening (7) configured to allow the flow of air conveyed via the ventilation duct (3) to pass into the passenger compartment of the vehicle, and
• means (10) for closing and for guiding the flow of air,
wherein:
• the closure and guiding means (10) comprise a first (11) and a second (13) pair of pivoting flaps, the second pair of flaps (13) being arranged downstream of the first pair of flaps (11) relative to the flow of air,
• the first pair of flaps (11) is mounted so as to be able to move by pivoting about a first common pivot axis (19),
**characterized in that**
• the second pair of flaps (13) is mounted so as to be able to move by pivoting about a second common pivot axis (21).

2. Diffuser (1) according to the preceding claim, **characterized in that** the closure and guiding means (10) are arranged inside the housing (4) and project from the outlet opening (7).

3. Diffuser (1) according to either one of the preceding claims, **characterized in that** the flaps (11a, 11b) of the first pair of flaps (11) are able to move independently of one another and the flaps (13a, 13b) of the second pair of flaps (13) are able to move independently of one another.

4. Diffuser (1) according to any one of the preceding claims, **characterized in that** said first common pivot axis (19) is arranged in a first orientation relative to the cross section of the housing (4) and said second common pivot axis (21) is arranged in a second orientation relative to the cross section of the housing (4), said second orientation being different to the first orientation.

5. Diffuser (1) according to Claim 4, **characterized in that** the first orientation and the second orientation of the common pivot axes (19, 21) are mutually perpendicular.

6. Diffuser (1) according to any one of the preceding claims, **characterized in that** it comprises, for each flap (11a, 11b, 13a, 13b), an associated actuator (23) configured to make said flap pivot independently of the other flap of the same pair, each pair of flaps (11, 13) being able to move between a closed position in which the pair of flaps (11, 13) completely obstructs the outlet opening (7) and an open position in which the pair of flaps (11, 13) frees up the outlet opening (7), passing through all intermediate positions in which the relative position of each flap (11a, 11b, 13a, 13b) is configured to define a blowing region (25) whose size and location in the outlet opening (7) can vary depending on the position of each flap (11a, 11b, 13a, 13b).

7. Diffuser (1) according to any one of the preceding claims, **characterized in that** the flaps (11a, 11b, 13a, 13b) of the first pair of flaps (11) and of the second pair of flaps (13) each have a surface area of at least 60% of the surface area of the outlet opening (7).

8. Diffuser (1) according to any one of the preceding claims, **characterized in that** the flaps (11a, 11b) of at least the first pair of flaps (11) are mounted in an interleaved manner.

9. Diffuser (1) according to any one of the preceding claims, **characterized in that** the first pair of flaps (11) and the second pair of flaps (13) are interleaved with one another.

10. Diffuser (1) according to either one of Claims 8 and 9, **characterized in that** the flaps (11a, 11b) borne by the first pair of flaps (11) and the flaps (13a, 13b) borne by the second pair of flaps (13) are concentric.

11. Diffuser (1) according to any one of the preceding claims, **characterized in that** the flaps (11a, 11b, 13a, 13b) of a given pair of flaps (11, 13) have a similar radius, preferably identical to within ±5%.

12. Diffuser (1) according to Claim 6, **characterized in that** the flaps (13a, 13b) of the second pair of flaps (13) each have a notch (14) that begins on the opposite side from the blowing region (25) and extends towards the blowing region (25), said notch (14) being configured to allow the first common pivot axis (19) of the first pair of flaps (11) to pass through in order to ensure that the flaps (11a, 11b) of the first pair of flaps (11) can be driven from outside the closure and guiding means (10).

13. Diffuser (1) according to Claim 12, **characterized in that** the closure and guiding means (10) further comprise a third pair of flaps (15) that is arranged in contact with the flaps (13a, 13b) of the second pair of flaps (13), between the actuator (23) of the first pair of flaps (11) and the blowing region (25) and is arranged so as to be able to move about the second common pivot axis (21), the flaps (15a, 15b) of the third pair of flaps (15) being configured to cover the notches (14) of the second pair of flaps (13) in order to limit lateral leakage of air at the outlet opening (7) when the flaps (13a, 13b) of the second pair of flaps (13) are in the closed position or in the intermediate position.

14. Diffuser (1) according to any one of the preceding claims, **characterized in that** the outlet opening (7) has a hemispherical grille (22) that is configured to straighten the flow of air.

15. Diffuser (1) according to Claim 14, **characterized in that** the hemispherical grille (22) is arranged upstream of the first pair of flaps (11) in the flow of air.

16. Diffuser (1) according to Claim 14, **characterized in that** the hemispherical grille (22) is arranged downstream of the second pair of flaps (13) in the flow of air.
